# EUROPÄISCHE PATENTANMELDUNG

(11) **EP 0 807 836 A2**
(43) Veröffentlichungstag der Anmeldung: **19.11.1997**
(21) Anmeldenummer: 97103691.8
(22) Anmeldetag: 06.03.1997
(51) Int. Cl.: G02B 6/30

(54) **Verfahren zur Herstellung eines integriert optischen Wellenleiterbauteils sowie Anordnung**

(30) Priorität: 14.05.1996 DE 19619353
(71) Anmelder: ROBERT BOSCH GMBH, 70442 Stuttgart (DE)
(72) Erfinder: Jarek, Mathias, Dr., 63500 Seligenstadt (DE); Marheine, Carsten, Dr., 31141 Hildesheim (DE); Kragl, Hans, Dr., 31199 Diekholzen (DE)

(57) **Zusammenfassung**

Zur Herstellung eines integriert optischen Wellenleiterbauteiles mit Faserankopplungen werden ein Substratbauteil (1) und ein Deckelbauteil (2) verwendet, wobei das Deckelbauteil (2) durch Positiv-Negativabformung vom Substratbauteil (1) gewonnen wird.

Zur Abtrennung des Wellenleiterstrukturbereiches (3) von den Bereichen der Faserankopplungen (6) sind quer zu letzteren Nuten (4, 4') sowie entsprechende Stege (5, 5') vorgesehen.

Das Verfahren nach der Erfindung ermöglicht es, daß die Faserjustage nicht in einem Prozeß mit der Wellenleiterbildung durchgeführt werden muß.

## Beschreibung

### Stand der Technik

Die Erfindung geht aus von einem Verfahren zur Herstellung eines integriert optischen Wellenleiterbauteiles mit Faserankopplungen unter Verwendung eines Substratbauteiles, welches abgeformte Strukturen aufweist, und eines Deckelbauteiles, welches durch Abformung vom Substratbauteil gewonnen ist, sowie einer entsprechenden Anordnung.

Aus der DE 42 17 553 A1 ist ein Wellenleiterbauteil bekannt, welches Faserankopplungen aufweist. Es besteht aus einem Basisteil aus polymeren Material und einem Deckelbauteil, welches als Negativform des Basisteiles aufgebaut ist. An den äußeren Enden sind V-nutförmige Faserankoppelbereiche vorgesehen. Im Mittelbereich des Basisteiles ist eine Wellenleitervertiefung vorgesehen, die mit einem optischen Wirkstoff, z. B. einem UV-aushärtenden Kleber versehen wird.

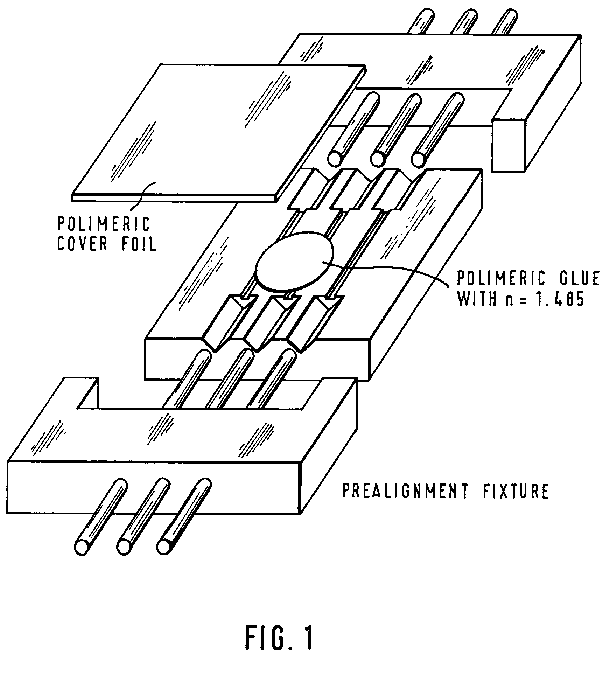

Figur 1 zeigt ein ähnliches Wellenleiterbauteil. Die anzukoppelnden Fasern werden zuvor ausgerichtet (Prealignment Fixture). Für die Wellenleiterverklebung werden entweder PMMA-Abdeckfolien (Polymeric Cover Foil) verwendet, die nach Aushärten des Kernmonomers mit dem Substrat, das die Strukturen trägt, verklebt werden (Polymeric glue). Hierzu wird ein Kernmonomerkleber in die Wellenleitervertiefungen getropft, mit einer Folie auf unter 1 µm Dicke ausgedrückt und anschließend durch UV-oder thermische Polymerisation ausgehärtet. Nach der Polymerisation hat das Kernpolymer einen ca. 5*10⁻³ höheren Brechungsindex und stellt damit mit dem umgebenden Polymersubstrat einen dielektrischen Wellenleiter dar. Es können auch die unter dem Handelsnamen Mylar (TM) bekannten Folien verwendet werden, welche nach dem Aushärten des Kernmonomers abgezogen werden können (Strip-Off-Deckel). Diese Folien müssen auf der Länge auf ca. +/- 10 µm genau geschnitten werden. Wie in Figur 1 dargestellt, werden die anzukoppelnden Fasern vor der Wellenleiterverklebung in die V-Nuten eingelegt und durch das überlaufende Kernmonomer an das Substrat geklebt.

### Vorteile der Erfindung

Das Verfahren mit den Maßnahmen gemäß Patentanspruch 1 ermöglicht es , daß die Prozesse der Fasterjustage und der Wellenleiterverklebung nicht wie bei den Lösungen gemäß dem Stand der Technik zeitgleich durchgeführt werden müssen. Das Kernmaterial an der Substratoberfläche kann auf unter 1µm Dicke ausgedrückt werden, ohne daß die passive Faserjustage zerstört oder gestört wird.

Im Gegensatz zu den zuvor aufgezeigten Lösungen, bei denen die Stirnseiten der anzukoppelnden Glasfasern von demselben Monomer (Kernmonomer) verklebt werden, welches auch die Wellenleiterkerne bildet, können die Prozesse der Stirnseitenverklebung der Fasern (Faserjustage) von der Wellenleiterbildung zeitlich getrennt werden, wodurch sowohl die Faserjustierung und Faserfixierung als auch die Wellenleiterstrukturbildung verbessert werden kann. Auch können die Materialien hinsichtlich der unterschiedlichen Prozesse optimiert werden. Probleme hinsichtlich Temperaturwechselbelastung, wie sie sich bei den bekannten Lösungen, insbesondere durch Faserabriß manifestierten, können vermieden werden.

Zuzuschneidende Foliendeckel wie bei dem in Figur 1 dargestellten Beispiel sind entbehrlich, da der Foliendeckel durch ein abgeformtes mikrostrukturiertes Deckelbauteil ersetzt werden kann. Das Verfahren nach der Erfindung eignet sich sowohl für zu verklebende, d. h. auf dem Substratbauteil verbleibende Deckel, wie auch für Strip-Off-Deckel. Die Deckelbauteile müssen nicht manuell mit hoher Präzision zugeschnitten werden, sondern passen automatisch, da durch einen Abformprozeß von gleicher Maske stammend, auf wenige µm hochpräzise auf das zugehörige Substratbauteil. Die wesentliche, dabei angewandte Konstruktionsidee ist die Möglichkeit, über eine Dreifachumkopiertechnik in Nickelgalvanik Positiv- und Negativformen herstellen zu können.

### Zeichnungen

Figur 2 zeigt eine Silizium-Masterstruktur für die Herstellung von Wellenleiterbauteilen nach der Erfindung,
Figur 3 zeigt ein zur Masterstruktur formgleiches Substratbauteil,
Figur 4 und Figur 5 zeigen Darstellungen zur Erläuterung der nickelgalvanischen Umkopiertechnik,
Figur 6 zeigt die Oberfläche eines Siliziumwafers für die Herstellung erfindungsgemäßer Wellenleiterbauteile,
Figur 7 zeigt Querschnitte durch die Silizium-Masterstruktur und durch das Substratbauteil,
Figur 8 zeigt das Einrasten eines Strip-Off-Deckelbauteiles in ein Polymersubstrat,
Figur 9 zeigt ein Kunststoff-Strip-Off-Deckelbauteil abgeformt von zweiter Generation Nickelblech und
Figur 10 zeigt einen Formeinsatz zur Herstellung von mikrostrukturierten Deckelbauteilen, die auf dem Substratbauteil verbleiben.

### Beschreibung von Ausführungsbeispielen

Polymersubstrate für Wellenleiterbauelemente werden beispielsweise mit 6*6 µm Wellenleiternuten und effektiv 67 µm tiefen Faserführungsnuten hergestellt, die zur Weiterverarbeitung mit einem höherbrechenden, polymeren Kernmaterial verklebt werden müssen. Damit ein monomodiger optischer Wellenleiter entsteht, muß das Kernmaterial an der Substratoberfläche auf unter 1µm Dicke ausgedrückt werden, wobei aber die passive Faserjustage nicht gestört bzw. zerstört werden darf. Die vorliegende Erfindung beschreibt ein Verfahren zur Herstellung eines integriert optischen Wellenleiterbauteiles mit einer besonders günstigen Wellenleiterverklebung.

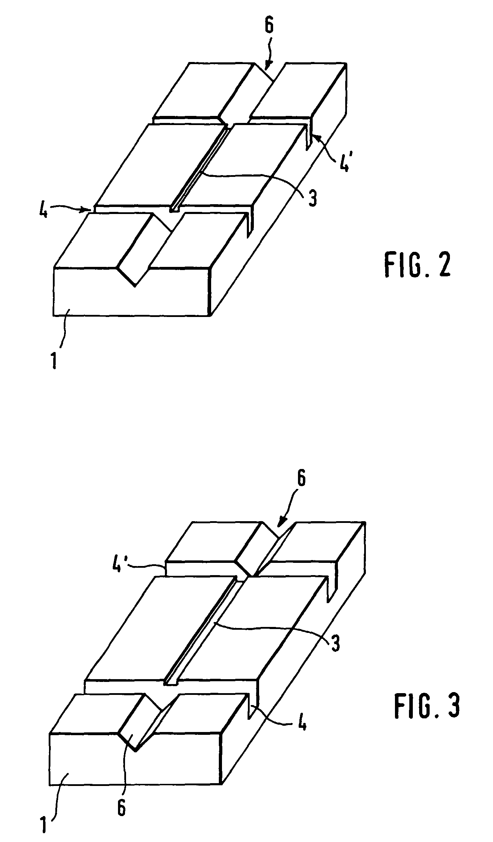

Figur 2 zeigt eine Silizium-Masterstruktur und Figur 3 ein Substratbauteil 1, welches stellvertretend sowohl für ein passives (nur Wellenleiternuten) als auch ein aktives (mit eingebetteten elektrooptischen Bauteilen oder Heizelektroden) stehen kann. Neben den V-Nutbereichen 6 für die Faserankopplungen ist der Wellenleiterstrukturbereich 3 zu sehen, der sich zwischen zwei im wesentlichen quer zu den Faserankopplungsbereichen - V-Nuten 6 - angeordneten parallelen Nuten 4, 4' erstreckt. Auf der Masterstruktur (Fig. 2) sind alle Strukturen mit Ausnahme der Sägeschnitte, die die Nuten 4, 4' darstellen, über eine Belichtungsmaske erzeugt und damit sehr genau reproduzierbar. Da der Sägeschnitt über den gesamten Silizium-Wafer hinwegführt und in Schnittrichtung praktisch keine Abweichung von der Parallelität aufweist, kann davon ausgegangen werden, daß der Abstand von Sägeschnitt zu Sägeschnitt über den Wafer immer gleich ist.

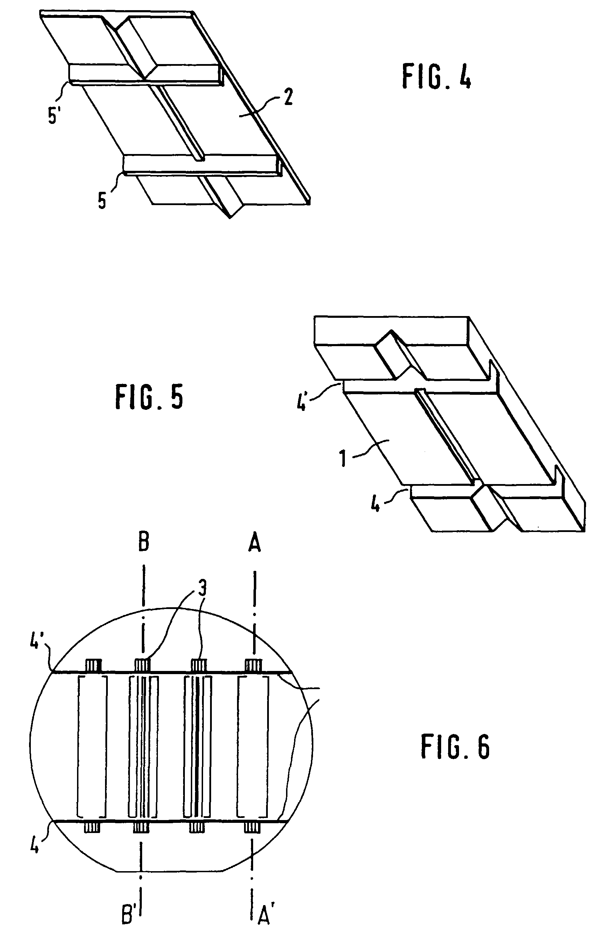

Die Figuren 4 und 5 dienen zur Erläuterung der nickelgalvanischen Umkopiertechnik. Figur 4 zeigt durch galvanische Abformung gewonnenes 1. bzw. 3. Generation Nickelblech, welches ohne die Stege im Wellenleiterstrukturbereich als Deckelbauteil 2 verwendbar ist. Die Stege 5, 5' entsprechen den Nuten 4, 4' des Substratbauteiles 1 und greifen in diese beim Zusammenfügen paßgenau ein.

Figur 5 zeigt ein 2. Generation-Nickelblech aus dem ein Strip-Off-Deckel aus Kunststoff abgeformt werden kann.

Die Erfindung ermöglicht drei verschiedene Konstruktionsverfahren zur Herstellung mikrostrukturierter Deckelbauteile, die alle drei auf dem gleichen Konzept beruhen:
i. Mikrostrukturierte Strip-Off-Deckel in einem 1. oder 3. Generation Nickelblech,
ii. Mikrostrukturierte Strip-Off-Deckel aus Kunststoff, abgeformt von einem 2. Generation Nickelblech,
iii. Mikrostrukturierte, am Substrat verbleibender Deckel aus Kunststoff, abgeformt von einem feinmechanisch nachgearbeiteten 2. Generation Nickelblech.

Die Erfindung basiert auf der Erkenntnis, daß 1., 2. und 3. Generation Nickelblech zueinander exakte, besser als µm genaue Replikate sind, die sich nur durch eine Positiv-Negativwandlung zwischen zwei benachbarten Generationen unterscheiden.

Figur 6 zeigt einen strukturierten Silizium-Wafer mit folgenden Eigenschaften:
1) in allen vier sichtbaren Kavitäten (Bereiche auf einem Wafer, in dem ein Substrat oder ein Deckelbauteil enthalten ist) sind die sog. V-Nutbereiche (oberhalb und unterhalb der Sägeschnitte) sowie die Tieferlegungen (der Bereich einer Kavität liegt gegenüber der Silizium-Oberfläche auf einem ca. 200 µm hohem Mesa, genannt 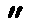 Tieferlegung", weil in 1. oder 3. Generation Nickel die Mikrostruktur unter der Oberfläche liegt) identisch, da sie durch eine elektronisch erzeugte Maske und identische Prozeßschritte erzeugt wurden.
2) In den beiden inneren Kavitäten, z. B. Schnitt B, B', befinden sich Wellenleiternuten, in den beiden äußeren Kavitäten, z. B. Schnitt A, A' befinden sich keine Wellenleiternuten.
3) Die beiden Sägeschnitte verlaufen über den gesamten Wafer nahezu perfekt parallel, wenn auch ihr Abstand zueinander nicht genau definiert ist (Toleranz ist abhängig von der Qualität der Wafersäge.

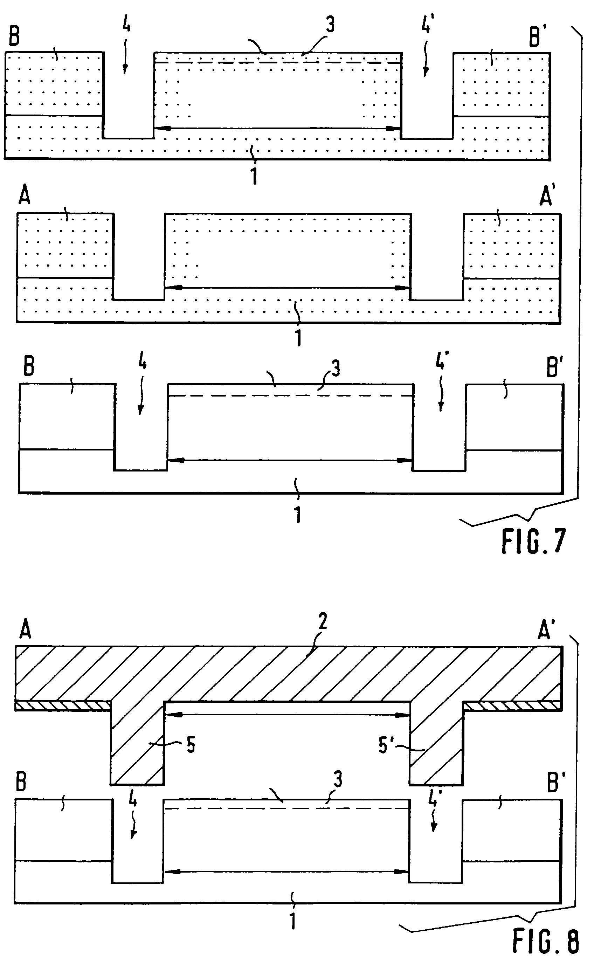

In Figur 7 sieht man die Konsequenz aus der oben unter 3. genannten Eigenschaft: die Länge 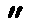 X", welche den Abstand von Sägeschnitt zu Sägeschnitt im Siliziummaster in den Bereichen A, A' und B, B' sowie im abgeformten Polymersubstrat angibt, ist immer gleich. Allein die unterschiedliche Temperaturausdehnung von Metall und Kunststoff führt zu einer Differenz; diese kann jedoch durch Temperaturanpassung ausgeglichen werden.

Figur 8 zeigt, wie aufgrund der geschilderten Geometrieverhältnisse ein aus dem Bereich AA' stammendes 3. Generation Nickelblech präzise in die Sägeschnitte des Polymersubstrates einrastet. Füllt man vor dem Zusammensetzen Kernmaterial (Kernmonomerkleber) zwischen Strip-Off-Deckel und Substrat und polymerisiert nach dem Zusammensetzen dieses Kernmaterial, z. B. durch Wärmezufuhr, aus, so entsteht bei richtiger Indexauswahl des Kernmaterials ein von Sägeschnitt 4 zu Sägeschnitt 4' reichender Wellenleiter. Der Strip-Off-Deckel läßt dabei die Wellenleitergräben frei. Die Faserführungsnuten können nicht von Kernmaterial gefüllt werden, da die V-Nut Bereiche 6 von Deckelbauteil 2 und Substratbauteil positiv - negativ identische Kopien sind, die exakt formschlüssig (Stege 5, 5') aufeinanderliegen, insbesondere bei hohem mechanischem Druck und einer dünnen Verchromung des Nickel-Strip-Off-Deckels im V-Nutbereich 6.

Die Prozesse der Wellenleiterbildung im Strukturbereich und der Ankopplung der Fasern können dadurch zeitlich getrennt voneinander vorgenommen werden. Für die Wellenleiterbildung wird ein Material hoher optischer Transparenz eingesetzt, wohingegen für die Ankopplung der Fasern ein Material hoher Festigkeit, insbesondere hinsichtlich hoher Temperaturschockfestigkeit, einsetzbar ist.

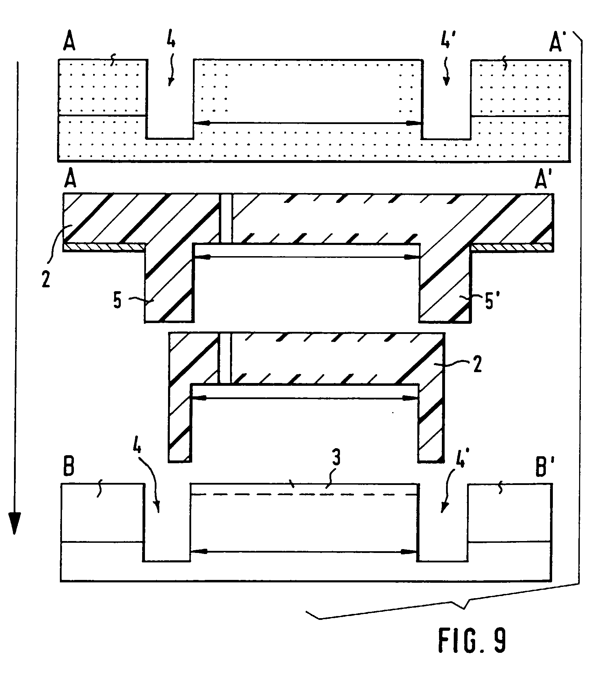

Nachteilig zu dem zuvor geschilderten Konstruktionsverfahren i. ist die Dauerverwendung eines teueren mikrostrukturierten Nickelbleches als Strip-Off-Deckel. Insbesondere können am Mikrostrukturdeckel Einschnitte, Löcher, Metallisierungen usw. nicht ohne weiteres getestet werden, weil der Strip-Off-Deckel aus Nickel zu wertvoll für risikobehaftete Modifikationen ist. Beim Konstruktionsverfahren ii. wie in Figur 9 dargestellt, wird der Strip-Off-Deckel durch Kunststoffabformung, z. B. durch eine thermoplastische Abformung, von einem 2. Generation Nickel erzeugt, d. h. das abgeformte Kunststoffteil ist abgesehen von Geometrieveränderungen durch unterschiedliche thermische Ausdehnung zwischen Metall und Kunststoff geometrisch identisch mit einem 3. Generation Nickel Strip-Off-Deckel und kann folglich genauso wie dieser eingesetzt werden, wenn der Kunststoffwerkstoff richtig ausgewählt wurde.

Vorteilhaft an dem Konstruktionsverfahren ii. ist die Möglichkeit, eine nahezu beliebige Menge von Strip-Off-Deckeln im Spritzguß herzustellen. Man hat in der Fertigung damit die Möglichkeit, für jedes Substratbauteil ein eigenes Deckelbauteil zu verwenden und braucht den Strip-Off-Deckel somit nicht nach jedem Einsatz zu reinigen. Eine Verchromung des V-Nutbereiches mit dem Ziel, das Monomer aus diesem Bereich zu verdrängen, ist wie beim Verfahren i. vorteilhaft.

Die Konstruktionsverfahren i. und ii. erzeugen jeweils einen sog. Strip-Off-Wellenleiter, d. h. der Wellenleiterkern liegt zunächst ungeschützt an der Oberfläche des Polymersubstrates und muß daher im nächsten Arbeitsschritt mit einem Polymerfilm geschützt werden.

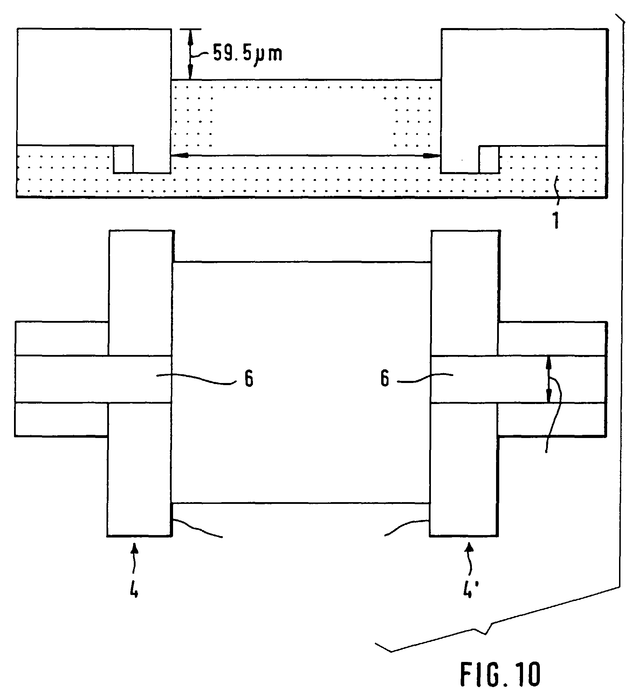

Das dritte Konstruktionsverfahren iii. (dargestellt in Fig. 10) verwendet ebenfalls einen Mikrostrukturdeckel. Dieser besteht jedoch aus einem Kunststoff, der durch das Kernmonomer verklebt wird, sodaß der Deckel nach der Wellenleiterherstellung nicht mehr abnehmbar ist. Das Mikrostrukturdeckelbauteil 2 wird hier von einem Formeinsatz abgeformt, der wie folgt herstellbar ist: Ausgangspunkt ist ein 2. Generation Nickelblech, welches durch feinmechanische Nacharbeit zu modifizieren ist. Aus dem zugehörigen 3. Generation Nickelblech wird der V-Nutbereich inklusive des Sägeschnittes 4, 4' ausgeschnitten. Dieses Teil wird nachgearbeitet, derart, daß seine Breite gerade der Breite des später verwendeten Faserbändchens entspricht, also z. B. für ein Achtfaserbändchen 2 mm. Das Teil wird in den V-Nutbereich des 2. Generation Nickelbleches eingepaßt. Da beide Teile inverse Kopien voneinander sind, verbleibt im Sägeschnitt des 2. Generation Nickelbleches kein Spalt (siehe Fig. 10). Anschließend erfolgt die Fixierung beider Teile durch z. B. Punktschweißen. Dann wird der Formeinsatz z. B. durch Flächenschleifen so nachgearbeitet, daß idealerweise eine 59,5 µm hohe Stufe (Fig. 10) entsteht. Die von dem Formeinsatz abgeformten Deckel, z. B. aus PMMA, drücken die Fasern in den V-Nutbereich des Substrates und schließen gleichzeitig den Wellenstrukturbereich 3 präzise ab, ohne daß ein nachträgliches präzises Zusägen wie bei herkömmlichen Methoden notwendig wäre.

Die Negativ-Positiv Abformung kann natürlich auch in umgekehrter Reihenfolge erfolgen; d. h. als Ausgangsform wird ein Deckelbauteil herangezogen, von welchem das Substratbauteil abgeformt wird.

## Patentansprüche

1. Verfahren zur Herstellung eines integriert optischen Wellenleiterbauteiles mit Faserankopplungen unter Verwendung eines Substratbauteiles (1), welches abgeformte Strukturen aufweist, und eines Deckelbauteiles (2), welches durch ein passgenaues entsprechendes negatives bzw. positives Abbild des Substratbauteiles mit Ausnahme der Wellenleiterstrukturbereiche gewonnen ist, mit folgenden Schritten:
- das Substratbauteil (1) wird vor der Herstellung des Deckelbauteiles (2) mit Nuten im Bereich gegenüberliegender Faserankopplungen versehen, die im wesentlichen quer zu den Faserankopplungsbereichen verlaufen,
- ein optisch leitendes Material wird in einen Strukturbereich eingebracht, welcher durch die Nuten (4, 4') und die durch die Positiv-Negativabbildung entstehenden Stege (5, 5') nach dem Zusammenfügen von Deckelbauteil und Substratbauteil von den übrigen Bereichen abgetrennt ist.

2. Verfahren nach Anspruch 1, dadurch gekennzeichnet, daß die Nuten (4, 4') durch zueinander parallele Sägeschnitte über einen Silizium-Wafer hinweg hergestellt werden.

3. Verfahren nach Anspruch 1 oder 2, dadurch gekennzeichnet, daß außerhalb der durch die Nuten (4, 4') abgetrennten Strukturbereiche (3) des Substratbauteiles (1) zueinander formschlüssige V-Nutbereiche (6) zur Aufnahme der zum Wellenleiterbauteil führenden Fasern vorgesehen sind.

4. Verfahren nach einem der Ansprüche 1 bis 3, dadurch gekennzeichnet, daß das Deckelbauteil (2) bzw. die zu seiner Herstellung abgeformte Struktur gegenüber dem Substratbauteil (1) so bearbeitet wird, daß sich im Strukturbereich (3) zwischen Substratbauteil (1) und Deckelbauteil (2) ein Wellenleitergraben ausbildet.

5. Verfahren nach einem der Ansprüche 1 bis 4, dadurch gekennzeichnet, daß nach dem Zusammenfügen eines Substratbauteiles (1) und eines Deckelbauteiles (2) insbesondere durch Einrasten der Stege (5, 5') in die Nuten (4, 4'), der Kernmonomerkleber in den Wellenleiterbereich (3) eingefüllt wird und anschließend polymerisiert wird derart, daß ein von Nut (4) zur Nut (4') bzw. Sägeschnitt zu Sägeschnitt reichender Wellenleiter entsteht.

6. Verfahren nach einem der Ansprüche 1 bis 5, dadurch gekennzeichnet, daß das Deckelbauteil (2) aus einem mikrostrukturierten, aus erster oder dritten Generation durch Abformung gewonnenem Nickelblech hergestellt wird.

7. Verfahren nach einem der Ansprüche 1 bis 5, dadurch gekennzeichnet, daß das Deckelbauteil (2) aus einem mikrostrukturierten Kunststoff hergestellt wird, welcher von einem Nickelblech zweiter Generation abgeformt ist.

8. Verfahren nach einem der Ansprüche 1 bis 5, dadurch gekennzeichnet, daß das Deckelbauteil (2) aus einem amn Substratbauteil (1) verbleibenden Deckel aus Kunststoff hergestellt wird, welcher von einem für die Faseraufnahme feinmechanisch nachgearbeiteten Nickelblech zweiter Generation abgeformt ist.

9. Verfahren nach einem der Ansprüche 1 bis 8, dadurch gekennzeichnet, daß als optisch leitendes Material ein Kernmonomerkleber in den Strukturbereich eingebracht wird.

10. Verfahren nach einem der Ansprüche 1 bis 9, dadurch gekennzeichnet, daß die V-Nutbereiche (6) mit einer dünnen Chromschicht versehen werden, welche das Eindringen von Kernmonomerkleber verhindert.

11. Verfahren nach einem der Ansprüche 1 bis 10, dadurch gekennzeichnet, daß die Prozesse der Wellenleiterbildung im Strukturbereich und der Ankopplung der Fasern zeitlich getrennt voneinander vorgenommen werden.

12. Verfahren nach einem der Ansprüche 1 bis 11, dadurch gekennzeichnet, daß für die Wellenleiterbildung im Strukturbereich (3) und für die Ankopplung der Fasern unterschiedliche Materialen verwendet werden.

13. Verfahren nach Anspruch 12, dadurch gekennzeichnet, daß für die Wellenleiterbildung ein Material hoher optischer Transparenz eingesetzt wird, wohingegen für die Ankopplung der Fasern ein Material hoher Festigkeit, insbesondere hinsichtlich Temperaturschockfestigkeit, eingesetzt wird.

14. Verfahren nach einem der Ansprüche 1 bis 13, dadurch gekennzeichnet, daß das bzw. die Deckelbauteil/e durch mehrfaches galvanisches und/oder kunststofftechnisches Umkopieren von einer einzigen Masterstruktur mit zwei durchgehenden zueinander parallelen Sägeschnitten (4, 4') erzeugt werden, wobei sich die Kavitäten für die Substratabformung allein durch das Vorhandensein von Wellenleitergräben/-stegen von den für die Deckelbauteile (2) vorgesehenen Kavitäten unterscheiden.

15. Verfahren nach einem der Ansprüche 1 bis 13, dadurch gekennzeichnet, daß das bzw. die Deckelbauteil/e durch mehrfaches galvanisches und/oder kunststofftechnisches Umkopieren von Masterstrukturen hergestellt werden, bei denen sich die für die Deckelbauteile vorgesehenen Kavitäten von den für die Substratabformung vorgesehenen Kavitäten allein durch das Vorhandensein von Wellenleitergräben/-stegen unterscheiden, und daß die Herstellung der Nuten (4, 4') bzw. Stege (5, 5') quer zu den Faserankopplungsbereichen insbesondere durch Freiätzung oder andere mikromechanische Verfahren derart vorgenommen wird, daß die Nuten (4, 4') und Stege (5, 5') paßgenau zueinander sind.

16. Integriert optisches Wellenleiterbauteil mit Faserankopplungen bestehend aus einem Substratbauteil (1) und einem Deckelbauteil (2), wobei Substratbauteil (1) und Deckelbauteil (2) zueinander entsprechende passgenaue negative bzw. positive Abbilder mit Ausnahme eines Wellenleiterstrukturbereiches (3) darstellen mit folgenden Merkmalen:
- im wesentlichen quer zu den Faserankopplungsbereichen (6) verlaufende Nuten (4, 4') im Substratbauteil (1), die in entsprechende paßgenaue Stege (5, 5') im Deckelbauteil (2) eingreifen,
- optisch leitendem Material in dem durch die Nuten (4, 4') bzw. Stege (5, 5') von den Faserankopplungsbereichen abgetrennten Wellenleiterstrukturbereich (3).
